(19) Europäisches Patentamt
European Patent Office
Office européen des brevets

(11) **EP 4 414 275 B1**

(12) **EUROPÄISCHE PATENTSCHRIFT**

(45) Veröffentlichungstag und Bekanntmachung des Hinweises auf die Patenterteilung:
**01.10.2025 Patentblatt 2025/40**

(21) Anmeldenummer: **24155286.8**

(22) Anmeldetag: **01.02.2024**

(51) Internationale Patentklassifikation (IPC):
***B65B 31/02*** (2006.01)    ***B65B 59/04*** (2006.01)
***F16P 3/10*** (2006.01)    ***F16P 3/08*** (2006.01)
***B65B 57/00*** (2006.01)    ***F16P 1/00*** (2006.01)
***F16P 3/12*** (2006.01)

(52) Gemeinsame Patentklassifikation (CPC):
**B65B 57/00; B65B 31/024; B65B 59/04; F16P 1/005; F16P 3/08; F16P 3/12**

(54) **SCHUTZSCHIEBER FÜR EINE ARBEITSMASCHINE**

PROTECTIVE SLIDE FOR A WORKING MACHINE

COULISSEAU DE PROTECTION POUR MACHINE DE TRAVAIL

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **07.02.2023 DE 102023102890**

(43) Veröffentlichungstag der Anmeldung:
**14.08.2024 Patentblatt 2024/33**

(73) Patentinhaber: **MULTIVAC Sepp Haggenmüller SE & Co. KG**
**87787 Wolfertschwenden (DE)**

(72) Erfinder:
• **NOBIS, Nick**
**87439 Kempten (DE)**
• **STEIGERWALD, Frank**
**87700 Memmingen (DE)**
• **PATZ, Dominik**
**87435 Kempten (DE)**

(74) Vertreter: **Grünecker Patent- und Rechtsanwälte PartG mbB**
**Leopoldstraße 4**
**80802 München (DE)**

(56) Entgegenhaltungen:
**EP-A1- 2 792 601**    **DE-A1- 2 516 293**
**JP-A- S5 759 000**    **US-A- 4 179 987**
**US-E- R E34 396**

## Beschreibung

Die vorliegende Erfindung betrifft einen Schutzschieber für eine Arbeitsmaschine in der Verpackungsindustrie gemäß Anspruch 1 sowie eine Arbeitsmaschine zum Verarbeiten von Verpackungsmaterial in der Verpackungsindustrie gemäß Anspruch 7 und ein Verfahren zum Verarbeiten von Verpackungsmaterial mit einer Arbeitsmaschine in der Verpackungsindustrie gemäß Anspruch 10.

## Stand der Technik

In der Verpackungsindustrie ist eine Vielzahl von Arbeitsmaschinen bekannt. Hierzu zählen beispielsweise Maschinen, die Verpackungsmaterial (etwa Plastik) verarbeitet können. Beispielsweise können aus einer Folienbahn oder allgemein einem Folienkörper durch eine Tiefziehmaschine Verpackungsmulden in der Folie erzeugt, in eine Befüllmaschine Produkt (beispielsweise Wurstwaren oder Käse) in die Verpackungsmulden eingelegt und durch eine Siegelstation die befüllten Verpackungsmulden mit einer Oberfolie gesiegelt werden.

Bekannte Verpackungsmaschinen umfassen hierzu nicht nur Transporteinrichtungen für das zu verarbeitende Verpackungsmaterial, sondern auch häufig Komponenten (Oberwerkzeug und Unterwerkzeug einer Siegelstation beispielsweise), die aufeinander zu und voneinander wegbewegt werden können, um das zwischen ihnen eingebrachte Verpackungsmaterial zu verarbeiten. Solche Komponenten und deren Bewegung relativ zueinander stellen für einen Bediener ein mögliches Verletzungsrisiko dar, sofern der Bediener in den Arbeitsraum der Arbeitsmaschine, in dem das Verpackungsmaterial verarbeitet wird, eingreifen kann.

Aus dem Stand der Technik sind verschiedene Möglichkeiten bekannt, Eingriffsmöglichkeiten des Bedieners in den Arbeitsraum möglichst zu vermeiden oder zu verhindern.

Beispielsweise zeigen die DE 10 2021 104083 A1 und die DE 39 25 796 A1 Vorrichtungen, die einen Durchlass der Arbeitsmaschine, durch den Verpackungsmaterial dem Arbeitsraum zugeführt oder aus diesem abgeführt werden kann, für den Eingriff durch einen Bediener blockieren können. Diese Einrichtungen sind als Schutzschieber ausgeführt und werden üblicherweise so vor den Durchlässen der Arbeitsmaschine positioniert, dass während eines Arbeitsgangs ein Eingreifen durch einen Bediener in den Arbeitsraum verhindert wird. Gleichzeitig ist es bekannt, durch geeignete Sensoren festzustellen, ob der Schutzschieber in der gewünschten Position ist, bevor der Arbeitsgang durchgeführt wird.

Um die Sicherheitsanforderungen zu erfüllen, muss sichergestellt sein, dass ein Bediener nicht versehentlich in den Arbeitsraum eingreift, obwohl der Schutzschieber in der Schutzposition positioniert ist. Hierzu ist ein zuverlässiges Erkennen dieser Schutzposition und auch geringer Abweichungen der tatsächlichen Position des Schutzschiebers von dieser Schutzposition erforderlich, was komplexe Sensoreinheiten erfordert. Damit wird der gesamte notwendige Bauraum für den Schutzschieber groß, was auf den notwendigen Bauraum für eine Verpackungsanlage Auswirkungen haben kann. Arbeitsmaschinen mit Schutzelementen und Sensoren zur Ermittlung von Positionen der Schutzelemente sind ferner aus DE 25 16 293 A1, US R E34 396 E und EP 2 792 601 A1 bekannt.

## Aufgabe

Ausgehend vom bekannten Stand der Technik besteht die zu lösende technische Aufgabe somit darin, einen Schutzschieber für eine Arbeitsmaschine in der Verpackungsindustrie sowie ein Verfahren zum Verarbeiten von Verpackungsmaterial mit einer Arbeitsmaschine in der Verpackungsindustrie anzugeben, die einen zuverlässigen Schutz eines Bedieners vor versehentlichem Eingreifen in einen Arbeitsraum einer Arbeitsmaschine gewährleisten und gleichzeitig eine reduzierte Baugröße realisieren.

## Lösung

Diese Aufgabe wird erfindungsgemäß durch den Schutzschieber für eine Arbeitsmaschine in der Verpackungsindustrie gemäß unabhängigem Anspruch 1, die Arbeitsmaschine in der Verpackungsindustrie gemäß unabhängigem Anspruch 7 sowie das Verfahren zum Verarbeiten von Verpackungsmaterial mit einer Arbeitsmaschine in der Verpackungsindustrie gemäß unabhängigem Anspruch 10 gelöst. Vorteilhafte Weiterbildungen der Erfindung sind in den Unteransprüchen erfasst.

Der erfindungsgemäße Schutzschieber für eine Arbeitsmaschine zur Verarbeitung von Verpackungsmaterial umfasst ein Montageelement zum Verbinden des Schutzschiebers mit einer Arbeitsmaschine, ein relativ zum Montageelement beweglich angeordnetes Schutzelement, ein erstes Sensorelement und ein zweites, an dem Montageelement fest angeordnetes Sensorelement, wobei das Schutzelement relativ zum Montageelement zwischen einer Freigabeposition und einer Schutzposition bewegt werden kann und wobei das erste Sensorelement und das zweite Sensorelement ausgestaltet sind, in der Schutzposition des Schutzelements in Kontakt zu treten und ein für den Kontakt indikatives Signal auszugeben, wobei das erste Sensorelement so angeordnet ist, dass es mit dem Schutzelement mitbewegt werden kann und eine Bewegungsamplitude des ersten Sensorelements größer ist als eine Bewegungsamplitude des Schutzelements.

Der Kontakt kann entweder ein physischer Kontakt zwischen dem ersten Sensorelement und dem zweiten Sensorelement sein oder ein über wirkende Kräfte, beispielsweise elektromagnetische Kräfte vermittelter Kontakt. Beispielsweise kann bei Überschreiten eines Schwellwertes einer auf das zweite Sensorelement von dem ersten Sensorelement ausgeübte magnetische Kraft von dem zweiten Sensorelement ein Kontakt mit dem ersten Sensorelement erkannt werden und ein entsprechendes, für diesen Kontakt indikatives Signal ausgegeben werden.

Unter dem Begriff der Bewegungsamplitude ist ein zurückgelegter Weg zwischen einem ersten Punkt und einem zweiten Punkt zu verstehen. Dass die Bewegungsamplitude des ersten Sensorelements größer als die Bewegungsamplitude des Schutzelements ist, ist hier nicht darauf beschränkt, dass der gesamte von dem ersten Sensorelement bei der Bewegung des Schutzelements von der ersten Position in die zweite Position zurückgelegte Weg größer ist, als der von dem Schutzelement zwischen der ersten Position und der zweiten Position zurückgelegte Weg. Erfindungsgemäß ist es ausreichend, wenn die Bewegungsamplitude des ersten Sensorelements zumindest zwischen einem ersten Punkt, den das Schutzelement einnimmt, und einem zweiten Punkt, der mit der Schutzposition zusammenfällt, größer ist, als der zurückgelegte Weg des Schutzelements zwischen dem ersten Punkt und dem zweiten Punkt. Hierdurch wird ein vergleichsweise geringer Hub oder allgemein Weg, den das Schutzelement zurücklegt, in einen größeren zurückgelegten Weg des ersten Sensorelements übersetzt.

Damit haben auch geringe Änderungen der Position des Schutzelements beispielsweise verglichen mit der Schutzposition eine vergleichsweise große Auswirkung auf die Position des ersten Sensorelements, so dass die Genauigkeit, mit der festgestellt wird, ob das Schutzelement sich in der Schutzposition befindet, durch das Bewirken des Kontakts oder dessen Ausbleiben genau festgestellt werden kann. Hiermit wird der Schutz eines Bedieners erhöht und gleichzeitig der notwendige Bauraum und die Komplexität der Sensoren reduziert.

In einer Ausführungsform ist vorgesehen, dass das erste Sensorelement und das zweite Sensorelement zusammen eine magnetische Schaltung bilden, wobei optional das zweite Sensorelement einen betätigbaren Magnetschalter und das erste Sensorelement einen Magneten zum betätigen des Magnetschalters umfassen. So können das erste Sensorelement und das zweite Sensorelement zusammen die Schaltung realisieren, wobei eines der Sensorelemente den betätigbaren Magnetschalter und das andere Sensorelement den Magneten umfasst. Magnetische Schaltungen sind zuverlässig auch über viele Arbeitszyklen betätigbar, sodass der Schutz des Bedieners auch über eine lange Betriebsdauer hin gewährleistet bleiben kann.

Es kann vorgesehen sein, dass die Bewegungsamplitude des ersten Sensorelements in einem ersten Bewegungsabschnitt, der die Freigabeposition umfasst, kleiner oder gleich der Bewegungsamplitude des Schutzelements in dem ersten Bewegungsabschnitt ist und dass die Bewegungsamplitude des ersten Sensorelements in einem zweiten Bewegungsabschnitt, der die Schutzposition umfasst, größer als die Bewegungsamplitude des Schutzelements in dem zweiten Bewegungsabschnitt ist. Im ersten Bewegungsabschnitt kann das erste Sensorelement insbesondere mit dem Schutzelement mitbewegt werden, sodass der Abstand eines beliebigen Punktes des ersten Sensorelements zu einem beliebigen Punkt des Schutzelements während der Bewegung konstant ist. In dem zweiten Bewegungsabschnitt wird das erste Sensorelement mit einer verglichen mit der Bewegungsamplitude des Schutzelements größeren Bewegungsamplitude bewegt, sodass zumindest Teile des ersten Sensorelements relativ zum Schutzelement eine Bewegung erfahren. Da die für die Schutzwirkung vorteilhafte Vergrößerung der Bewegungsamplitude des ersten Sensorelements nur im Bereich der Schutzposition des Schutzelements relevant ist, um diese korrekt zu bestimmen (durch Betätigung des zweiten Sensorelements), wird mit dieser Ausführungsform eine konstruktive Vereinfachung, insbesondere ein reduzierter Platzbedarf für die Bewegung des ersten Sensorelements realisiert.

In einer Ausführungsform ist vorgesehen, dass das ersten Sensorelement an einem um eine Achse drehbar gelagerten Hebel angeordnet ist, wobei die Achse den Hebel in einen ersten Hebelarm und einen zweiten Hebelarm unterteilt, wobei der zweite Hebelarm kürzer ist als der erste Hebelarm und das erste Sensorelement an dem ersten Hebelarm angeordnet ist, wobei der Schutzschieber einen Anschlag umfasst, an den der zweite Hebelarm bei einer Bewegung des Schutzelements in Richtung der Schutzposition anschlagen kann, sodass durch eine Drehung des Hebels um die Achse das erste Sensorelement in Richtung des zweiten Sensorelements bewegt werden kann. Diese mechanische Ausgestaltung zur Realisierung der unterschiedlich großen Bewegungsamplituden des ersten Sensorelements und des Schutzelements ist zuverlässig und weist einen geringen Verschleiß auf, sodass eine zuverlässige Feststellung der Schutzposition des Schutzelements auch bei langer Betriebsdauer erreicht werden kann.

Es kann vorgesehen sein, dass der erste Hebelarm eine größere Masse als der zweite Hebelarm besitzt. Diese Ausführungsform ist besonders vorteilhaft wenn das Schutzelement in der Freigabeposition eine geringere Höhe einnimmt als in der Schutzposition, ist jedoch hierauf nicht beschränkt. Durch die unterschiedliche Masse des ersten Hebelarms und des zweiten Hebelarms kann das erste Sensorelement zuverlässig aufgrund des wirkenden Drehmoments auf den Hebel in eine gewünschte Ausgangslage gebracht werden, sodass ein in Kontakt treten mit dem zweiten Sensorelement bevorzugt nur durch eine Bewegung des Schutzelements in die Schutzposition bewirkt werden kann, was die Zuverlässigkeit beim Feststellen der Einnahme der Schutzposition durch das Schutzelement erhöht.

In einer Ausführungsform umfasst der Schutzschieber ein Rückstellelement, das so angeordnet ist, dass das Rückstellelement bei einer Bewegung des Schutzelements von der Schutzposition in die Freigabeposition das erste Sensorelement von dem zweiten Sensorelement wegbewegt. Ein unbeabsichtigtes Verbleiben des ersten Sensorelements nah an dem zweiten Sensorelement oder in Kontakten mit dem zweiten Sensorelement kann so verhindert werden.

In einer Ausführungsform definieren das Schutzelement und die Bewegungsamplitude des Schutzelements einen Bereich und das Montageelement, das erste Sensorelement und das zweite Sensorelement sind außerhalb des Bereichs angeordnet. Der Bereich ist hier ein als von dem Schutzelement während seiner Bewegungsamplitude insgesamt eingenommener Raum zu verstehen und kann beispielsweise als der sich ergebene Raum dargestellt werden, der bei einer Bewegung einer das Schutzelement vollständig umgebenen Fläche entlang der Bewegungsamplitude erhalten wird. In dieser Ausführungsform ist also das erste Sensorelement und das zweite Sensorelement nicht in einem Bereich angeordnet, der von dem Schutzelement durchlaufen wird, was eine kompaktere Konstruktion erlaubt und beispielsweise ein Anordnen des ersten Sensorelements und des zweiten Sensorelements unterhalb dieses Bereichs ermöglicht (beispielsweise wenn das Schutzelement vertikal bewegt wird). Der Platzbedarf für den Schutzschieber reduziert sich hiermit.

Die erfindungsgemäße Arbeitsmaschine zum Verarbeiten von Verpackungsmaterial, umfasst eine Zuführungsöffnung zum Zuführen von Verpackungsmaterial, einen Arbeitsraum zum Verarbeiten von Verpackungsmaterial, eine Abführöffnung zum Abführen von verarbeitetem Verpackungsmaterial aus dem Arbeitsraum und einen Schutzschieber beispielsweise nach einer der vorangegangenen Ausführungsformen im Bereich der Zuführöffnung und/oder im Bereich der Abführöffnung, wobei der Schutzschieber so angeordnet ist, dass das Schutzelement in der Schutzposition einen Eingriff in die Zuführöffnung und/oder die Abführöffnung durch einen Bediener blockiert. Mit dieser Arbeitsmaschine ist ein sicheres Verarbeiten von Verpackungsmaterial möglich.

Es kann vorgesehen sein, dass das Schutzelement in der Schutzposition einen Transport von Verpackungsmaterial in die Zuführöffnung und/oder einen Transport von verarbeitetem Verpackungsmaterial aus der Abführöffnung ermöglicht. Bei dem Verpackungsmaterial kann es sich beispielsweise um eine Folienbahn oder Folienzuschnitte oder zusammenhängende oder getrennte Verpackungsmulden handeln. Während ein Weiterführen des Verpackungsmaterials auch in der Schutzposition des Schutzelements möglich ist, wird dennoch ein Eingreifen in den Arbeitsraum durch einen Bediener verhindert. Der Durchsatz der Arbeitsmaschine kann bei gleichbleibender Sicherheit eines Bedieners hiermit erhöht werden.

Die Arbeitsmaschine kann eine Siegelstation, eine Tiefziehmaschine, eine Einlegemaschine, eine Inspektionsvorrichtung und/oder eine Desinfektionsvorrichtung umfassen. Für diese Maschinen ist eine Verwendung des Schutzschiebers vorteilhaft, da es hier zu einer kontinuierlichen Zufuhr von Verpackungsmaterial kommt.

Erfindungsgemäß ist ein Verfahren zum Verarbeiten von Verpackungsmaterial mit einer Arbeitsmaschine vorgesehen, wobei die Arbeitsmaschine eine Zuführungsöffnung zum Zuführen von Verpackungsmaterial, einen Arbeitsraum, eine Abführöffnung zum Abführen von verarbeitetem Verpackungsmaterial aus dem Arbeitsraum und einen Schutzschieber umfasst, wobei der Schutzschieber mit der Arbeitsmaschine über ein Montageelement des Schutzschiebers verbunden ist und ein relativ zum Montageelement beweglich angeordnetes Schutzelement, ein erstes Sensorelement und ein zweites, an dem Montageelement fest angeordnetes Sensorelement umfasst, wobei das Schutzelement relativ zum Montageelement zwischen einer Freigabeposition und einer Schutzposition bewegt werden kann und wobei das erste Sensorelement und das zweite Sensorelement in der Schutzposition des Schutzelements in Kontakt treten und ein für den Kontakt indikatives Signal ausgeben, wobei das erste Sensorelement so angeordnet ist, dass es mit dem Schutzelement mitbewegt wird und eine Bewegungsamplitude des ersten Sensorelements größer ist als eine Bewegungsamplitude des Schutzelements, wobei das Verfahren ein Freigeben eines Arbeitsschritts der Arbeitsmaschine durch eine Steuereinheit der Arbeitsmaschine basierend auf einem Empfangen des für den Kontakt indikativen Signals umfasst. Dieses Verfahren erlaubt ein sicheres Verarbeiten von Verpackungsmaterial auch bei Anwesenheit eines Bedieners.

Es kann vorgesehen sein, dass die Bewegungsamplitude des ersten Sensorelements in einem ersten Bewegungsabschnitt, der die Freigabeposition umfasst, kleiner oder gleich der Bewegungsamplitude des Schutzelements in dem ersten Bewegungsabschnitt ist und dass die Bewegungsamplitude des ersten Sensorelements in einem zweiten Bewegungsabschnitt, der die Schutzposition umfasst, größer als die Bewegungsamplitude des Schutzelements in dem zweiten Bewegungsabschnitt ist. Hierdurch wird eine kompakte Bauweise der Arbeitsmaschine und insbesondere des Schutzschiebers realisiert, was den notwendigen Platzbedarf reduziert.

In einer Ausführungsform ist das ersten Sensorelement an einem um eine Achse drehbar gelagerten Hebel angeordnet, wobei die Achse den Hebel in einen ersten Hebelarm und einen zweiten Hebelarm unterteilt, wobei der zweite Hebelarm kürzer ist als der erste Hebelarm und das erste Sensorelement an dem ersten Hebelarm angeordnet ist, wobei der Schutzschieber einen Anschlag umfasst, an den der zweite Hebelarm bei einer Bewegung des Schutzelements in Richtung der Schutzposition anschlägt und durch eine Drehung des Hebels um die Achse das erste Sensorelement in Richtung des zweiten Sensorelements bewegt wird. Diese mechanische Ausgestaltung erlaubt eine zuverlässige Feststellung der Position des Schutzelements in der Schutzposition.

Es kann vorgesehen sein, dass der erste Hebelarm eine größere Masse als der zweite Hebelarm besitzt. Hiermit wird ein zuverlässiges Zurückstellen des ersten Sensorelements erreicht, da der Hebel aufgrund wirkender Drehmomente in einer Ausgangsstellung gezwungen wird.

In einer Ausführungsform umfasst der Schutzschieber ein Rückstellelement umfasst und das erste Sensorelement wird bei einer Bewegung des Schutzelements von der Schutzposition in die Freigabeposition durch das Rückstellelement von dem zweiten Sensorelement wegbewegt. Das zuverlässige Erkennen einer Bewegung des Schutzelements aus der Schutzposition heraus kann hiermit sichergestellt werden.

Das Schutzelement und die Bewegungsamplitude des Schutzelements können einen Bereich definieren und das Montageelement, das erste Sensorelement und das zweite Sensorelement außerhalb des Bereichs angeordnet sein. Diese Ausführungsform ermöglicht eine kompakte Bauweise.

Es kann vorgesehen sein, dass das erste Sensorelement und das zweite Sensorelement zusammen eine magnetische Schaltung bilden, wobei optional das zweite Sensorelement einen betätigbaren Magnetschalter und das erste Sensorelement einen Magneten zum betätigen des Magnetschalters umfassen. Mit dieser Ausführungsform ist auch ein lang andauernder Betrieb bei gleichbleibendem Schutz des Bedieners vor Verletzungen möglich.

Jede der vorangegangenen Ausführungsform ist im Sinne der vorliegenden Offenbarung mit jeder der weiteren beschriebenen Ausführungsform kombinierbar.

**Kurze Beschreibung der Figuren**

Fig. 1 zeigt eine schematische Ansicht einer Arbeitsmaschine mit einem Schutzschieber gemäß einer Ausführungsform

Fig. 2 zeigt eine Zufuhröffnung mit einem Schutzschieber gemäß einer Ausführungsform

Fig. 3 bis 5 zeigen einen Bewegungsablauf des Schutzelements und des ersten Sensorelements gemäß einer Ausführungsform

Fig. 6 zeigt eine Ausführungsform eines Rückstellelements

**Ausführliche Beschreibung**

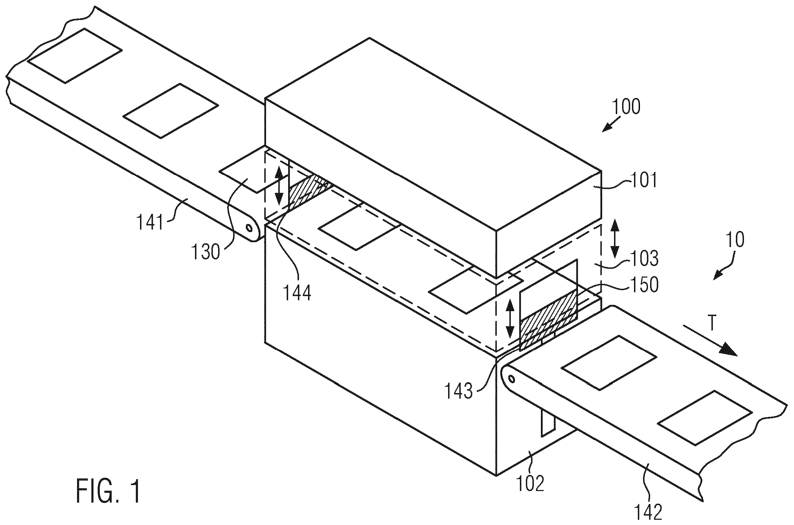

Fig. 1 zeigt eine Arbeitsmaschine 100 als Teil einer Verpackungsmaschine 10. Die Arbeitsmaschine ist vorgesehen, um Verpackungsmaterial 130 zu verarbeiten, das beispielsweise in Form einer oder mehrerer durchgängiger Folienbahnen oder zusammenhängenden oder vereinzelten Verpackungsmulden (bereits befüllt oder unbefüllt) vorliegen kann. Diesbezüglich und hinsichtlich der Ausgestaltung der Arbeitsmaschine ist die Erfindung nicht beschränkt. In der hier dargestellten Ausführungsform ist die Arbeitsmaschine 100 beispielhaft als Siegelstation ausgebildet.

Siegelstationen sind aus dem Stand der Technik grundsätzlich bekannt und umfassen üblicherweise ein Oberwerkzeug 101 sowie ein Unterwerkzeug 102 und einen dazwischen gebildeten Arbeitsraum 103, in dem das Verarbeiten von Verpackungsmulden 130, die mit Produkt versehen sind, erfolgt. Das Oberwerkzeug 101 und das Unterwerkzeug 102 sind entsprechend des dargestellten Doppelpfeils aufeinander zu bewegbar, so dass die befüllten Verpackungsmulden und eine in der Siegelstation auf die Verpackungsmulden aufgebrachte Siegelfolie miteinander in Anlage gebracht und durch Einwirken von Wärme miteinander verbunden werden können, um die Verpackungen zu siegeln.

Die Arbeitsmaschine 100 umfasst dazu üblicherweise eine Zuführöffnung 144 und eine Abführöffnung 143, die, wie hier dargestellt, auf gegenüberliegenden Seiten der Arbeitsmaschine angeordnet sein können, wobei die Zuführöffnung 154 in Transportrichtung T des Verpackungsmaterials 130 vor der Abführöffnung 143 angeordnet ist und die Zuführöffnung 144 und die Abführöffnung 143 den Arbeitsraum 103 begrenzen können. Die Zuführöffnung und die Abführöffnung 144 und 143 können beispielsweise in einer Schutzwand oder einer Verkleidung der Arbeitsmaschine 100 als Öffnungen gebildet sein.

Die Arbeitsmaschine ist hier beispielhaft als zwischen einer Transporteinrichtung 141, die Verpackungsmaterial 130 der Arbeitsmaschine 100 zuführen kann, und einer Transporteinrichtung 142, die verarbeitetes Verpackungsmaterial aus der Arbeitsmaschine 100 abführen kann, gezeigt. Die Ausgestaltung der Transporteinrichtungen 141 und 142 ist nicht beschränkt. Es kann sich beispielsweise um Transportbänder und/oder Greifer handeln, wobei die Transporteinrichtungen 141 und 142 nach Zweckmäßigkeit ausgestaltet sein können und insbesondere nicht identisch ausgestaltet sein müssen.

Während Fig. 1 ein Beispiel einer Arbeitsmaschine 100 gemäß Ausführungsformen in Form einer Siegelstation zeigt, sind auch andere Ausführungsformen der Arbeitsmaschine möglich. Insbesondere kann die Arbeitsmaschine als Siegelstation oder als Tiefziehmaschine oder Einlegemaschine oder Inspektionsvorrichtung oder Desinfektionsvorrichtung ausgestaltet sein. Auch eine Verpackungsanlage umfassend eine oder mehrere dieser Arbeitsmaschinen, beispielsweise in Transportrichtung von Verpackungsmaterial hintereinander, ist denkbar.

Die Zuführöffnung 144 und die Abführöffnung 143 stellen als Öffnungen in den Arbeitsraum 103 grundsätzlich ein Verletzungsrisiko dar, da ein Bediener der Arbeitsmaschine in den Arbeitsraum 103 hineingreifen könnte, während die Arbeitsmaschine in Betrieb ist. Gleichzeitig müssen die Zuführöffnung und die Abführöffnung groß genug sein, um eventuell notwendige Reparaturen oder auch das Entfernen von Verpackungsmaterial bei einer Fehlfunktion der Arbeitsmaschine zu gewährleisten.

Um während des Betriebs der Arbeitsmaschine 100 das Verletzungsrisiko eines Bedieners möglichst zu minimieren, ist erfindungsgemäß wenigstens vor der Zuführöffnung 144 und/oder der Abführöffnung 143 ein hier schematisch dargestellter Schutzschieber 150 vorgesehen, der angeordnet und ausgestaltet ist, die Zuführöffnung und/oder die Abführöffnung soweit zu verkleinern oder zu verschließen, dass ein Bediener bei Betrieb der Arbeitsmaschine 100 nicht in den Arbeitsraum 103 eingreifen kann. Bei einer taktweise arbeitenden Maschine kann dies umfassen, dass der Arbeitsschritt der Arbeitsmaschine (am Beispiel der Fig. 1 beispielsweise das Aufeinanderzubewegen des Oberwerkzeugs 101 und des Unterwerkzeugs 102) nur durchgeführt werden kann, wenn der Schutzschieber oder ein Schutzelement des Schutzschiebers in eine Schutzposition verschoben wurde, die einen Eingriff eines Bedieners in den Arbeitsraum 103 hinein möglichst vermeidet, indem die noch verbleibende Öffnung so klein ist, dass beispielsweise kein Finger oder kein Arm durch diese bis in den Arbeitsraum 103 hineingestreckt werden kann.

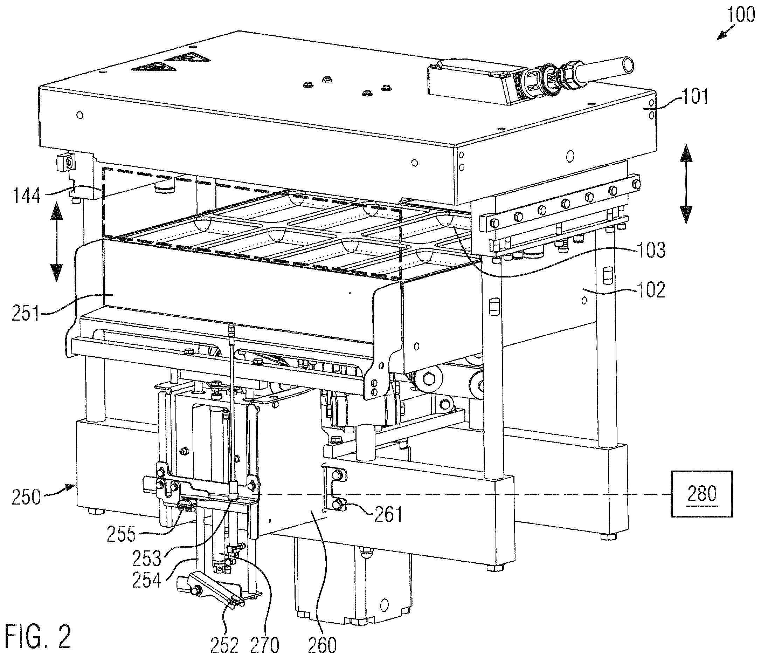

Die Fig. 2 zeigt einen Schutzschieber gemäß einer Ausführungsform in Relation zu der Arbeitsmaschine 100. In der Fig. 2 ist die Arbeitsmaschine erneut beispielhaft als Siegelstation mit einem Oberwerkzeug 101 und einem Unterwerkzeug 102, die relativ zueinander beweglich angeordnet sind, gezeigt. Der Schutzschieber 250 umfasst in dieser Ausführungsform ein Montageelement 260, das über ein oder mehrere geeignete Verbindungselemente, beispielsweise Schrauben 261, etwa mit dem feststehenden Unterwerkzeug 102 oder einem sonstigen bevorzugt feststehenden Teil (beispielsweise einer Verkleidung, in der die Zuführöffnung 144 oder die Abführöffnung 143 gebildet ist) der Arbeitsmaschine 100 verbunden werden kann. Das Montageelement 260 hat in diesem Sinne die Funktion eines feststehenden Rahmens, relativ zu dem der Schutzschieber 251 beweglich angeordnet ist, um entsprechend der dargestellten Doppelpfeilrichtung bewegt zu werden und die Zuführöffnung 144 (oder die Abführöffnung 143) zu verschließen oder zu öffnen. Wenn im Folgenden auf die Position des Schutzschiebers 251 im Bereich der Zuführöffnung 144 abgestellt wird, versteht es sich, dass sämtliche Ausführungsformen des Schutzschiebers und jedes seiner Teile sowie deren Funktion auch auf eine Positionierung des Schutzschiebers vor der Abführöffnung 143 oder für jeweils einem Schutzschieber vor jeder dieser Öffnungen anwendbar sind.

Wird der Schutzschieber 251 in der hier gezeigten Ausführungsform nach oben bewegt, so verkleinert sich die Zuführöffnung 144. Wird er nach unten bewegt, wird die Zuführöffnung vergrößert. Ein Positionieren des Schutzschiebers vor der Zuführöffnung 144 derart, dass ein Bediener nicht mehr in den Arbeitsraum eingreifen kann, wird als Schutzposition bezeichnet. Eine Positionierung des Schutzschiebers vor der Zuführöffnung, die ein Eingreifen eines Bedieners ermöglicht, wird als Freigabeposition bezeichnet.

Es kann vorgesehen sein, dass ein Zuführen von Verpackungsmaterial (in der Fig. 2 nicht dargestellt) in den Arbeitsraum 103 der Arbeitsmaschine sowohl in der Freigabestellung des Schutzschiebers 251, in der der Arbeitsraum 103 durch die Zuführöffnung 144 zugänglich ist, als auch in der Schutzposition, in der der Arbeitsraum 103 durch die Zuführöffnung 144 für den Bediener nicht zugänglich ist, möglich ist. Dies ist insbesondere bei kontinuierlicher Zufuhr von Verpackungsmaterial vorteilhaft. In alternativen Ausführungsformen, in denen beispielsweise getrennte Verpackungsmaterialstücke bei taktweisem Betrieb der Arbeitsmaschine dem Arbeitsraum 103 zugeführt werden, kann vorgesehen sein, dass während eines Arbeitsschrittes kein weiteres Verpackungsmaterial durch die Zuführöffnung dem Arbeitsraum 103 zugeführt wird. In dieser Ausführungsform kann vorgesehen sein, dass der Schutzschieber 251 die Zuführöffnung vollständig verschließt, so dass auch keine Zufuhr von Verpackungsmaterial (oder analog ein Abführen von Verpackungsmaterial aus der Abführöffnung) möglich ist.

Zum Bewegen des Schutzelements 251 relativ zum Montageelement 260 und relativ zur Zuführöffnung 144 kann ein Antriebselement 270, beispielsweise in Form eines Pneumatikzylinders, vorgesehen sein, das mit dem Schutzelement 251 wirkverbunden ist und dieses in Bewegung versetzen kann. Anstelle eines Pneumatikzylinders kann hier beispielsweise auch ein Servoantrieb oder ein Stellantrieb genutzt werden.

Erfindungsgemäß umfasst der Schutzschieber weiterhin ein erstes Sensorelement 252, das mit dem Schutzelement 251 derart verbunden ist, dass es zumindest teilweise mit dem Schutzelement 251 mitbewegt werden kann. Dazu kann beispielsweise ein Verbindungselement 254, etwa in Form einer Aufhängung für das erste Sensorelement 252, vorgesehen sein, an dem das erste Sensorelement 252 angeordnet ist und das mit dem Schutzelement 251 fest verbunden ist, so dass das Verbindungselement 254 der Bewegung des Schutzelements 251 folgt.

Weiterhin umfasst der Schutzschieber 250 ein zweites Sensorelement 253. Das zweite Sensorelement 253 ist feststehend relativ zum Montageelement 260 angeordnet, kann insbesondere an dem Montageelement 260 befestigt sein.

Erfindungsgemäß ist vorgesehen, dass das erste Sensorelement und das zweite Sensorelement derart zusammenwirken können, dass sie bei (beispielsweise berührendem oder physischem) Kontakt ein für diesen Kontakt indikatives Signal ausgeben. Die Anordnung des ersten Sensorelements 252 relativ zum Schutzelement 251 um die Anordnung des zweiten Sensorelements 253 ist so ausgestaltet, dass das erste Sensorelement und das zweite Sensorelement in berührendem Kontakt miteinander sind, wenn das Schutzelement 251 in der Schutzposition angeordnet ist, in allen anderen Stellungen des Schutzelements jedoch das erste Sensorelement und das zweite Sensorelement keinen (berührenden oder physischen) Kontakt aufweisen.

Wenn das erste Sensorelement und das zweite Sensorelement sich in berührendem Kontakt miteinander befinden, kann durch diese ein für den berührenden Kontakt indikatives Signal ausgegeben werden, das an eine hier schematisch dargestellte Steuereinheit 280 übermittelt werden kann. Bei der Steuereinheit 280 kann es sich beispielsweise um einen Computer mit Speicher und Prozessoreinheit handeln, der über geeignete Programmierung verfügt, um das für den Kontakt indikative Signal zu empfangen und gegebenenfalls zu verarbeiten.

Bevorzugt kann die Steuereinheit 280 basierend auf dem empfangenen Signal den Betrieb der Arbeitsmaschine und insbesondere das Durchführen eines Arbeitsschritts der Arbeitsmaschine (beispielsweise das Siegeln von Verpackungen oder das Aufeinanderzubewegen des Oberwerkzeugs 101 und des Unterwerkzeugs 102) freigeben oder sperren.

Bevorzugt gibt die Steuereinheit den Arbeitsschritt nur frei, wenn das für den Kontakt indikative Signal empfangen wird, da sich dann das Schutzelement 251 in der Schutzposition befindet, so dass ein Eingriff des Bedieners in den Arbeitsraum nicht stattfindet. Wird ein solches Signal nicht empfangen, kann die Steuereinheit den Arbeitsschritt blockieren oder sperren, so dass das Verletzungsrisiko des Bedieners minimiert ist.

Da bei andauerndem Betrieb der Arbeitsmaschine das Schutzelement 251 üblicherweise zwischen der Schutzposition und der Freigabeposition hin und her bewegt wird, kann vorgesehen sein, dass das erste Sensorelement und/oder das zweite Sensorelement so ausgestaltet sind, dass sie in regelmäßigen Zeitabständen (beispielsweise alle 2ms bis 50ms, bevorzugt alle 2ms bis 5ms) ein Signal ausgeben, das indikativ dafür ist, ob ein Kontakt zwischen dem ersten Sensorelement und dem zweiten Sensorelement erfolgt oder nicht erfolgt. Nach Auswertung dieses Signals kann die Steuereinheit dann (nahezu) in Echtzeit und im Wesentlichen kontinuierlich ermitteln, ob ein Arbeitsschritt freigegeben werden kann oder gesperrt bleibt. So kann vorgesehen sein, dass, wenn die Steuereinheit ein Signal empfängt, das indikativ dafür ist, dass kein Kontakt zwischen dem ersten Sensorelement und dem zweiten Sensorelement vorliegt, die Steuereinheit den Arbeitsschritt sperrt und erst wieder freigibt, wenn die Steuereinheit ein Signal empfängt, das indikativ für den Kontakt zwischen dem ersten Sensorelement und dem zweiten Sensorelement ist.

In einer Ausführungsform können das erste Sensorelement 252 und das zweite Sensorelement 253 zusammen eine Magnetschaltung bilden. Dabei umfasst eines der Sensorelemente einen Magneten und das andere Sensorelement einen Magnetschalter, der durch den Magneten betätigbar ist, so dass ein Signal erzeugt werden kann, das die Betätigung des Magnetschalters durch den Magneten anzeigt. Bevorzugt ist der Magnetschalter als oder als Teil des zweiten Sensorelements 253 realisiert und der Magnet ist oder ist Teil des ersten Sensorelements 252. Da der Magnetschalter über eine Stromzufuhr und gegebenenfalls physische Datenverbindung zu der Steuereinheit 280 verfügen muss, hat diese Ausführungsform den Vorteil, dass die Kabelführung von und/oder zu dem Magnetschalter während des Betriebs der Arbeitsmaschine nicht bewegt werden muss, was die Fehleranfälligkeit reduziert.

Erfindungsgemäß ist vorgesehen, dass eine Bewegungsamplitude des ersten Sensorelements 252 größer ist, als die Bewegungsamplitude des Schutzelements 251. Dies ist so zu verstehen, dass bei einer Bewegung des Schutzelements 251 von einem ersten Punkt zu einem zweiten Punkt das Schutzelement eine Wegstrecke der Länge L zurücklegt. Das erste Sensorelement 252, das über das Verbindungselement 254 im Wesentlichen der Bewegung des Schutzelements 251 folgt, legt hierbei jedoch eine größere Wegstrecke zurück. Dies muss nicht allgemein für die gesamte Bewegung des ersten Sensorelements 252 beim Folgen der Bewegung des Schutzelements 251 von der Freigabeposition zur Schutzposition gelten, sondern erfindungsgemäß ist vorgesehen, dass dies zumindest für einen Teilbereich der gesamten Bewegung des Schutzelements von der Freigabeposition in die Schutzposition erfolgt.

Dabei kann die Bewegung des Schutzelements 251 von der Freigabeposition in die Schutzposition in einen ersten Bewegungsabschnitt und einen zweiten Bewegungsabschnitt unterteilt werden. Der erste Bewegungsabschnitt umfasst die Freigabeposition selbst und einen weiteren Punkt auf dem Weg des Schutzelements 251 von der Freigabeposition in die Schutzposition, wobei der weitere Punkt nicht der Schutzposition des Schutzelements 251 entspricht. In diesem Bewegungsabschnitt kann die Bewegungsamplitude des Schutzelements 251 mit der Bewegungsamplitude des ersten Sensorelements 252 identisch sein oder die Bewegungsamplitude des ersten Sensorelements 252 kann kleiner als die Bewegungsamplitude des Schutzelements 251 in diesem ersten Bewegungsabschnitt sein.

Der zweite Bewegungsabschnitt kann sich von diesem Punkt aus bis zur Schutzposition erstrecken. In diesem Bewegungsabschnitt ist der gesamte von dem ersten Sensorelement 252 zurückgelegte Weg (also dessen Bewegungsamplitude) größer als die Bewegungsamplitude des Schutzelements. Dies führt dazu, dass eine vergleichsweise geringe Veränderung der Position des Schutzelements 251 um die Schutzposition herum in eine große Veränderung der Position des ersten Sensorelements 252 übersetzt wird, womit sich der Abstand zum zweiten Sensorelement 253 verglichen mit der Veränderung der Position des Schutzelements 251 stärker verändert. Dadurch wird die Empfindlichkeit des durch das erste Sensorelement und das zweite Sensorelement gebildeten Sensors für die Position des Schutzelements 251 erhöht, da der Kontakt durch die Bewegung des ersten Sensorelements relativ zum zweiten Sensorelement und damit dem Abstand dieser zueinander bedingt ist.

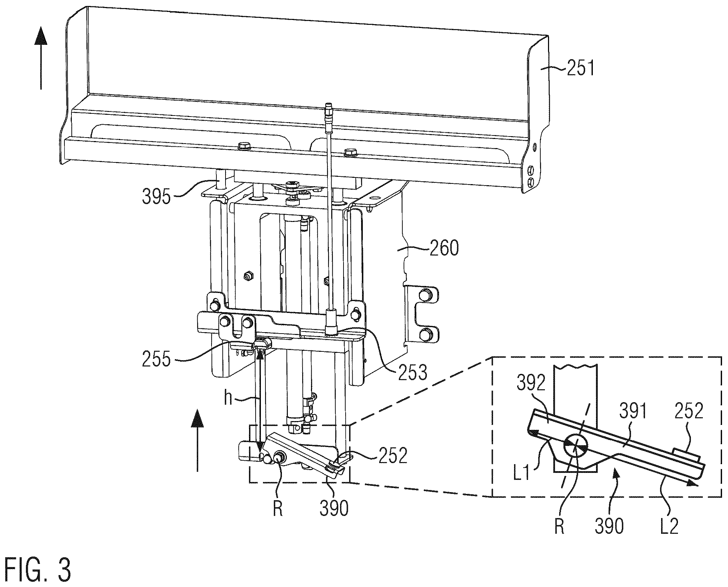

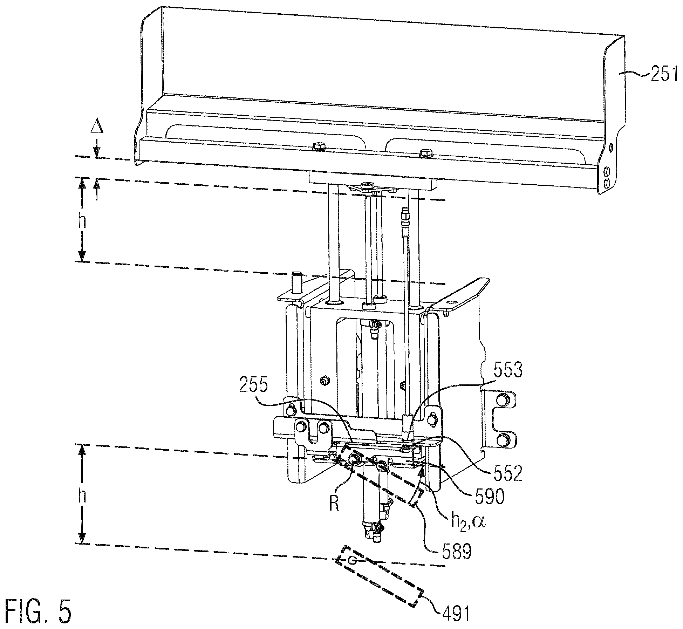

In einer Ausführungsform wird diese unterschiedliche Bewegungsamplitude des ersten Sensorelements 252 und des Schutzelements 251 dadurch erreicht, dass das Montageelement einen Anschlag 255 umfasst, gegen den das Sensorelement 252 oder ein Element, an dem das erste Sensorelement 252 angeordnet ist, laufen kann und gegenüber dem das erste Sensorelement 252 in Drehung versetzt werden kann. Wie in den Ausführungsformen der Fig. 3 und 5 noch beschrieben wird, kann hierdurch eine vergleichsweise geringe Veränderung der Position des Schutzelements 251 in eine verglichen damit große Veränderung der Position des ersten Sensorelements 252 relativ zum zweiten Sensorelement 253 überführt werden.

Um dies zu erläutern, zeigen die Fig. 3 bis 5 den Bewegungsablauf bei der Bewegung des Schutzelements von der Freigabeposition (Fig. 3) in die Schutzposition (Fig. 5).

In Fig. 3 ist das Schutzelement 251 in der Freigabeposition. Zum Feststellen der Position des Schutzelements 251 in der Freigabeposition ist ein Sensor nicht unbedingt erforderlich, da es beim Schutz des Bedieners vor Verletzungen im Wesentlichen darauf ankommt, dass das Schutzelement 251 zuverlässig in der Schutzposition erkannt werden kann. Es kann jedoch vorgesehen sein, dass ein Kontaktsensor 395 beispielsweise an dem Montageelement 260 angeordnet ist, der mit dem Schutzelement 251 in berührendem Kontakt gerät, wenn das Schutzelement in der Freigabeposition positioniert ist. Dieser Sensor kann ein Signal an die Steuereinheit 280 (siehe Fig. 2) übermitteln, die somit zusätzlich die Information erhält, dass das Schutzelement in der Freigabeposition angeordnet ist. Dies kann genutzt werden, um beispielsweise dem Bediener zu signalisieren, dass er in den Arbeitsraum der Arbeitsmaschine eingreifen kann. Dies ist jedoch lediglich optional.

In der hier gezeigten Ausführungsform befindet sich das erste Sensorelement 252 in einem Abstand h zu dem Anschlag 255. In der gezeigten Ausführungsform ist das erste Sensorelement 252 an einem um eine Rotationsachse R drehbar gelagerten Hebel angeordnet. In der vergrößerten schematischen Ansicht in der Fig. 3 ist zu erkennen, dass der Hebel 390 so an der Rotationsachse R angeordnet ist, dass die Rotationsachse R den Hebel in einen ersten Hebelarm 391 und einen zweiten Hebelarm 392 unterteilt. Das erste Sensorelement ist an dem ersten Hebelarm 391 angeordnet und die Länge L1 des ersten Hebelarms 391 ist größer als die Länge L2 des zweiten Hebelarms. Bevorzugt kann auch vorgesehen sein, dass die Masse des ersten Hebelarms 391 größer ist als die Masse des zweiten Hebelarms 392. Ohne weitergehenden physischen Kontakt etwa mit dem Anschlag 255 bewirkt das durch die unterschiedlichen Massen der Hebelarme bewirkte Drehmoment auf den Hebel, dass der Hebel ohne Kontakt mit dem Anschlag 255 in der hier gezeigten Ausgangslage angeordnet ist. Die Bewegung des ersten Hebelarms 391 mit dem ersten Sensorelement in eine Drehrichtung weg von dem Schutzelement 251, also in der Darstellung der Figur 3 nach unten kann auch durch einen hier nicht dargestellten Anschlag begrenzt werden. Ohne einen solchen Anschlag wird der Hebel dem Drehmoment folgend sich so bewegen, dass der erste Hebelarm 391 vertikal nach unten zeigt, da dies das energetische Minimum darstellt.

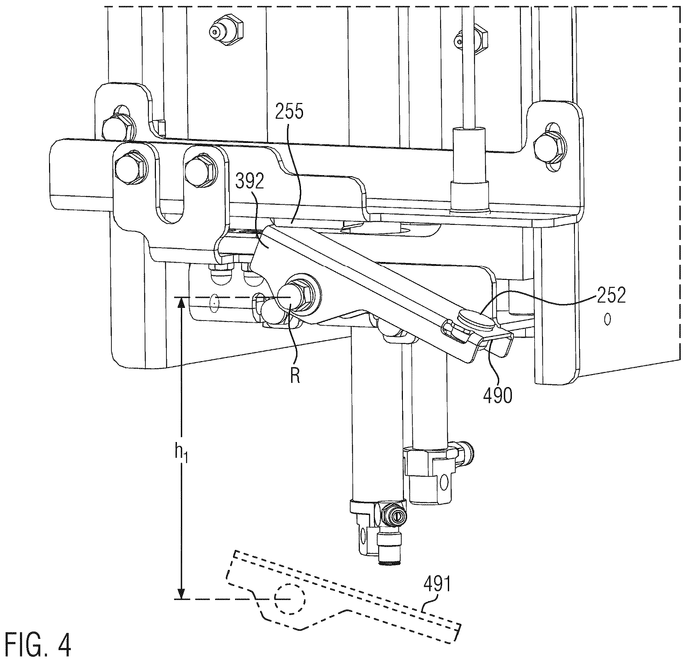

In Fig. 4 ist eine Situation dargestellt, in der das Schutzelement 251 (hier nicht gezeigt) um die Höhe h1, die mit dem Abstand h aus der Fig. 3 identisch ist, aus der Freigabeposition in Richtung der Schutzposition bewegt wurde. Während dieser Bewegung folgt das erste Sensorelement 252 aus der hier gestrichelt dargestellten Position 491 der Position des Schutzelements und der kürzere Hebelarm 392 tritt in berührenden Kontakt mit dem Anschlag 255 am Ende der Bewegung aus der ursprünglichen Position 491. Dieser Bewegungsabschnitt ist so gewählt, dass der Hebel 490, an dem das erste Sensorelement 252 angeordnet ist, noch keine Drehung um die Rotationsachse R erfahren hat. Dementsprechend ist die Bewegungsamplitude des ersten Sensorelements 252 während dieses Bewegungsabschnitts mit der Bewegungsamplitude des Schutzelements 251 identisch (beide legen den Weg h zurück).

In der hier dargestellten Situation ist das Schutzelement noch nicht in die Schutzposition verbracht, sondern muss noch weiter in Richtung der Schutzposition bewegt werden. Beispielsweise kann die Länge h1 90 % des gesamten von dem Schutzelement von der Freigabeposition bis zur Schutzposition zurückgelegten Wegs entsprechen.

Bei Weiterbewegung des Schutzelements erfolgt dann aufgrund der festen Position des Anschlags 255 keine Bewegung des Hebelarms 392 mehr über den Anschlag 255 hinaus. Stattdessen wird der Hebel um die Rotationsachse R in Drehung versetzt, wie dies in Fig. 5 gezeigt ist.

Das Schutzelement 251 wird nun noch um den Weg Δ in Richtung der Schutzposition bewegt, wobei es nach Zurücklegen des Weges der Länge Δ die Schutzposition erreicht. Das Schutzelement hat also insgesamt den Weg h + Δ zurückgelegt.

Wie in der Fig. 5 zu erkennen ist, erfolgt während dieser Bewegung des Schutzelements um die Strecke $\Delta$ nun eine Drehung des Hebels 590 aus der in Fig. 5 gestrichelt dargestellten Position 589 heraus um den Winkel $\alpha$. Dies ist mit einer Bewegung des ersten Sensorelements 552 um den Weg h2 verknüpft. Wird der Winkel $\alpha$ in Anteilen von $2\pi$ ausgedrückt, so entspricht die Bewegungsamplitude des ersten Sensorelements

252 $\frac{\alpha}{2\pi} L1$ , wobei L1 der Abstand des ersten Sensorelements 552 von der Rotationsachse R entlang des Hebels 590 ist, der zum Zwecke der Erläuterung mit der Länge des ersten Hebelarms (siehe Figur 2) gleichgesetzt wurde. Der vom kürzeren Hebelarm zurückgelegte Weg entspricht dem von dem ersten Schutzelement zurückgelegten Weg $\Delta$ und kann in erster Näherung als

$\frac{\alpha}{2\pi} L2$ (mit L2 als Länge des Hebelarms gemessen von der Rotationsachse R aus) gleichgesetzt werden.

Damit ist das Verhältnis der Bewegungsamplitude des ersten Sensorelements zu der Bewegungsamplitude $\Delta$ des Schutzelements 251 ungefähr L1/L2 und damit größer als 1, so dass das erste Sensorelement 552 verglichen mit der Bewegungsamplitude $\Delta$ eine größere Bewegungsamplitude erfährt.

Wie in Fig. 5 dargestellt, ist das erste Sensorelement am Ende dieser Bewegung in Kontakt mit dem zweiten Sensorelement, so dass ein für diesen Kontakt indikatives Signal ausgegeben werden kann.

Der durch das erste Sensorelement 552 und das zweite Sensorelement 553 gebildete Sensor kann eine Toleranz aufweisen, die auch dann zu einer Ausgabe eines entsprechenden Signals, das indikativ für den Kontakt ist, führt, wenn dieser Kontakt noch nicht hergestellt ist. Aufgrund des Verhältnisses der Bewegungsamplitude des Schutzelements und der Bewegungsamplitude des ersten Sensorelements entspricht dies jedoch einer noch geringeren Bewegung des Schutzelements aus der Schutzposition heraus. Damit wird die Genauigkeit, mit der die Positionierung des Schutzelements in der Schutzposition bestimmt werden kann, verbessert.

Weiterhin bewirkt eine Stellung des Schutzelements geringfügig außerhalb der Schutzposition einen vergleichsweise großen Abstand zwischen dem ersten Sensorelement und dem zweiten Sensorelement, so dass auch bei geringfügiger Abweichung der Stellung des Schutzelements von der Schutzposition kein Kontakt zwischen dem ersten Sensorelement und dem zweiten Sensorelement hergestellt wird, so dass von der Steuereinheit zuverlässig der Arbeitsschritt der Arbeitsmaschine blockiert werden kann.

Dabei kann die Genauigkeit bzw. Sensitivität erhöht werden, indem das Verhältnis von L1 und L2 vergrößert wird. So kann vorgesehen sein, dass die Länge L1 des ersten Hebelarms, an dem das erste Sensorelement 552 angeordnet ist, wenigstens dreimal so lang, bevorzugt fünfmal so lang, besonders bevorzugt siebenmal so lang, wie die Länge L2 des kürzeren Hebelarms ist. Am Beispiel des letzteren Falls kann eine Abweichung der Position des Schutzelements von der Schutzposition von 1mm in einen ungefähren Abstand des ersten Sensorelements vom zweiten Sensorelement von 7mm übersetzt werden. Damit ist mit hoher Genauigkeit ein Feststellen von Abweichungen der Position des Schutzelements 251 von der Schutzposition möglich und damit ein sicherer Betrieb der Arbeitsmaschine gewährleistet.

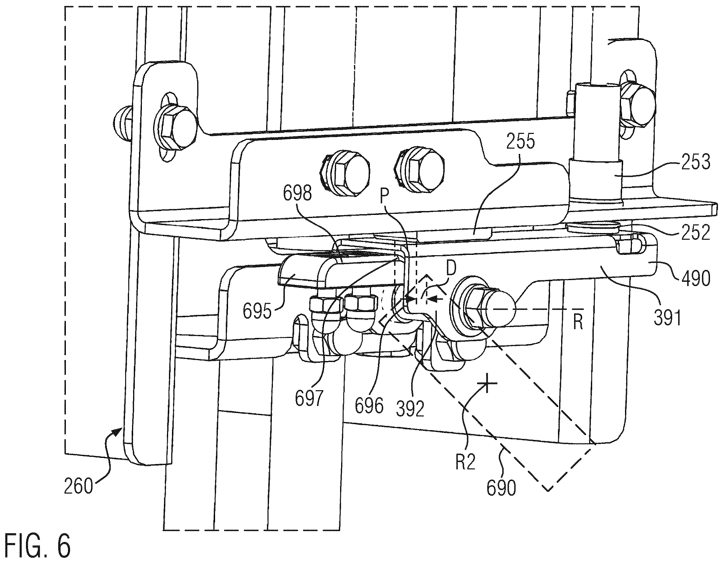

Figur 6 zeigt eine weitere Ausführungsform, in der der Schutzschieber weiterhin ein Rückstellelement 695 umfasst. Das Rückstellelement ist in dieser Ausführungsform feststehend relativ zum Montageelement 260 angeordnet, kann insbesondere mit diesem fest verbunden sein (beispielsweise über Verschraubungen). Das Rückstellelement 695 ist bevorzugt so angeordnet, dass der Hebelarm 392 bei einer Bewegung des Schutzelements in Richtung der Schutzposition (siehe Figuren 3 bis 5) an dem Rückstellelement in einem Abstand D vorbeigeführt werden kann in Richtung des Anschlags 255. Wie mit Bezug auf die Figuren 3 bis 5 beschrieben, wird bei Erreichen des Anschlags 255 der Hebelarm 392 des Hebels 490 um die Rotationsachse R gedreht und der Hebelarm 391 in Richtung des zweiten Sensorelements 253 gedreht, sodass das erste Sensorelement 252 und das zweite Sensorelement 253 in Kontakt treten können, wenn das Schutzelement die Schutzposition erreicht.

In dieser Position erstreckt sich der zweite Hebelarm 392 wie hier gezeigt über eine Strecke P in eine Richtung über das Rückstellelement 695.

Wird der Schutzschieber aus der Schutzposition wieder in Richtung der Freigabeposition bewegt, bewirkt diese Bewegung eine Drehung des zweiten Hebelarms 392 um die Rotationsachse R, die durch das feststehende Rückstellelement 695 bewirkt wird, da der zweite Hebelarm 392 in der Schutzposition des Schutzelements sich zumindest teilweise über das Rückstellelement 695 erstreckt. Das Rückstellelement 695 bewirkt somit, dass das erste Sensorelement 252 bei einer Bewegung des Schutzelements von der Schutzposition in die Freigabeposition von dem zweiten Sensorelement 253 wegbewegt wird. Durch diese Ausführungsform wird sichergestellt, dass der Hebelarm 392 und damit auch der erste Hebelarm 391 und das erste Sensorelement 252 bei Bewegen des Schutzelements aus der Schutzposition in die Freigabeposition zuverlässig von dem zweiten Sensorelement 253 wegbewegt wird.

Es kann vorgesehen sein, dass das Rückstellelement eine in Richtung des Anschlags 255 weisende Auflagefläche 698 und/oder eine von dem Anschlag 255 aus gesehen abfallende, zumindest teilweise gekrümmte Seitenfläche 697 umfasst. Auf der Auflagefläche kann der zweite Hebelarm 392 aufliegen, wenn das Schutzelement sich in der Schutzposition befindet. Hierdurch kann der zweite Hebelarm 392 zwischen dem Anschlag 255, der sich oberhalb des zweiten Hebelarms 392 erstreckt, und der Auflagefläche 698 positioniert werden, was ein unbeabsichtigtes Herausbewegen des zweiten Hebelarms 392 verhindern kann, sodass der Kontakt zwischen dem ersten Sensorelement 252 und dem zweiten Sensorelement 253 erhalten bleibt, solang das Schutzelement sich in der Schutzposition befindet.

Die gekrümmte Seitenfläche kann vorteilhaft sicherstellen, dass der zweite Hebelarm 392 ohne Verkanten mit dem Rückstellelement 695 aus der Position, die der zweite Hebelarm 392 einnimmt, wenn sich das Schutzelement in der Schutzposition befindet, herausbewegt werden kann, wenn das Schutzelement aus der Schutzposition in die Freigabeposition verbracht wird.

Bevorzugt kann der zweite Hebelarm 392 dazu einen durch Material des zweiten Hebelarms in Richtung des Anschlags 255 begrenzten Aufnahmebereich 696 umfassen, in den das Rückstellelement 695 bei einer Drehung des zweiten Hebelarms 392 eingreifen kann.

Zusätzlich zum Freigeben und Sperren eines Arbeitsschritts der Arbeitsmaschine basierend auf der Position des Schutzschiebers kann die Arbeitsmaschine weiterhin einen Folienerkennungsmechanismus umfassen, der beispielsweise im Arbeitsraum und/oder in der Zuführöffnung und/oder der Abführöffnung angeordnet ist und zum Feststellen der Anwesenheit und/oder Abwesenheit von Verpackungsmaterial zumindest in dem Arbeitsraum ausgebildet ist. Unabhängig von der Position des Schutzschiebers kann vorgesehen sein, dass der Arbeitsschritt oder eine Funktion der Arbeitsmaschine auch dann gesperrt wird, wenn durch den Folienerkennungsmechanismus festgestellt wird, dass sich kein Verpackungsmaterial in dem Arbeitsbereich befindet.

**Patentansprüche**

1. Schutzschieber (150) für eine Arbeitsmaschine (100) zur Verarbeitung von Verpackungsmaterial (130), der Schutzschieber (150) umfassend ein Montageelement (260) zum Verbinden des Schutzschiebers (150) mit einer Arbeitsmaschine (100), ein relativ zum Montageelement beweglich angeordnetes Schutzelement (251), ein erstes Sensorelement (252) und ein zweites, an dem Montageelement (260) fest angeordnetes Sensorelement (253), wobei das Schutzelement (251) relativ zum Montageelement (260) zwischen einer Freigabeposition und einer Schutzposition bewegt werden kann und wobei das erste Sensorelement (252) und das zweite Sensorelement (253) ausgestaltet sind, in der Schutzposition des Schutzelements (251) in Kontakt zu treten und ein für den Kontakt indikatives Signal auszugeben, **gekennzeichnet dadurch, dass** das erste Sensorelement (252) so angeordnet ist, dass es mit dem Schutzelement (251) mitbewegt werden kann und eine Bewegungsamplitude des ersten Sensorelements (252) größer ist als eine Bewegungsamplitude des Schutzelements (251).

2. Schutzschieber (150) nach Anspruch 1, wobei das erste Sensorelement (252) und das zweite Sensorelement (253) zusammen eine magnetische Schaltung bilden, wobei optional das zweite Sensorelement (253) einen betätigbaren Magnetschalter und das erste Sensorelement (252) einen Magneten zum betätigen des Magnetschalters umfassen.

3. Schutzschieber (150) nach Anspruch 1 oder 2, wobei die Bewegungsamplitude des ersten Sensorelements (252) in einem ersten Bewegungsabschnitt, der die Freigabeposition umfasst, kleiner oder gleich der Bewegungsamplitude des Schutzelements (150) in dem ersten Bewegungsabschnitt ist und wobei die Bewegungsamplitude des ersten Sensorelements (252) in einem zweiten Bewegungsabschnitt, der die Schutzposition umfasst, größer als die Bewegungsamplitude des Schutzelements (150) in dem zweiten Bewegungsabschnitt ist.

4. Schutzschieber (150) nach einem der Ansprüche 1 bis 3, wobei das ersten Sensorelement (252) an einem um eine Achse (R) drehbar gelagerten Hebel (390) angeordnet ist, wobei die Achse den Hebel (390) in einen ersten Hebelarm (391) und einen zweiten Hebelarm (392) unterteilt, wobei der zweite Hebelarm (392) kürzer ist als der erste Hebelarm (391) und das erste Sensorelement (252) an dem ersten Hebelarm angeordnet ist, wobei der Schutzschieber (150) einen Anschlag (255) umfasst, an den der zweite Hebelarm (392) bei einer Bewegung des Schutzelements (251) in Richtung der Schutzposition anschlagen kann, sodass durch eine Drehung des Hebels (390) um die Achse (R) das erste Sensorelement (252) in Richtung des zweiten Sensorelements (253) bewegt werden kann, wobei optional der erste Hebelarm (391) eine größere Masse als der zweite Hebelarm (392) besitzt.

5. Schutzschieber (150) nach einem der Ansprüche 1 bis 4, wobei der Schutzschieber ein Rückstellelement (695) umfasst, das so angeordnet ist, dass das Rückstellelement (695) bei einer Bewegung des Schutzelements (251) von der Schutzposition in die Freigabeposition das erste Sensorelement (252) von dem zweiten Sensorelement (253) wegbewegt.

6. Schutzschieber (150) nach einem der Ansprüche 1 bis 5, wobei das Schutzelement (251) und die Bewegungsamplitude des Schutzelements einen Bereich definieren und das Montageelement (260), das erste Sensorelement (252) und das zweite Sensorelement (253) außerhalb des Bereichs angeordnet sind.

7. Arbeitsmaschine (100) zum Verarbeiten von Verpackungsmaterial (130), die Arbeitsmaschine umfassend eine Zuführungsöffnung (144) zum Zuführen von Verpackungsmaterial, einen Arbeitsraum (103) zum Verarbeiten von Verpackungsmaterial, eine Abführöffnung (143) zum Abführen von verarbeitetem Verpackungsmaterial aus dem Arbeitsraum (103) und einen Schutzschieber (150) nach einem der Ansprüche 1 bis 6 im Bereich der Zuführöffnung (144) und/oder im Bereich der Abführöffnung (143), wobei der Schutzschieber (150) so angeordnet ist, dass das Schutzelement (251) in der Schutzposition einen Eingriff in die Zuführöffnung (144) und/oder die Abführöffnung (143) durch einen Bediener blockiert.

8. Arbeitsmaschine (100) nach Anspruch 7, wobei das Schutzelement (251) in der Schutzposition einen Transport von Verpackungsmaterial in die Zuführöffnung (144) und/oder einen Transport von verarbeitetem Verpackungsmaterial aus der Abführöffnung (143) ermöglicht.

9. Arbeitsmaschine (100) nach Anspruch 7 oder 8, wobei die Arbeitsmaschine (100) eine Siegelstation, eine Tiefziehmaschine, eine Einlegemaschine, eine Inspektionsvorrichtung und/oder eine Desinfektionsvorrichtung umfasst.

10. Verfahren zum Verarbeiten von Verpackungsmaterial (130) mit einer Arbeitsmaschine (100), wobei die Arbeitsmaschine eine Zuführungsöffnung (144) zum Zuführen von Verpackungsmaterial, einen Arbeitsraum (103), eine Abführöffnung (143) zum Abführen von verarbeitetem Verpackungsmaterial aus dem Arbeitsraum (103) und einen Schutzschieber (150) umfasst, wobei der Schutzschieber (150) mit der Arbeitsmaschine (100) über ein Montagelement (260) des Schutzschiebers (150) verbunden ist und ein relativ zum Montageelement (260) beweglich angeordnetes Schutzelement (251), ein erstes Sensorelement (252) und ein zweites, an dem Montageelement fest angeordnetes Sensorelement (253) umfasst, wobei das Schutzelement (251) relativ zum Montageelement (260) zwischen einer Freigabeposition und einer Schutzposition bewegt werden kann und wobei das erste Sensorelement (252) und das zweite Sensorelement (253) in der Schutzposition des Schutzelements (251) in Kontakt treten und ein für den Kontakt indikatives Signal ausgeben, **gekennzeichnet dadurch, dass** das erste Sensorelement (252) so angeordnet ist, dass es mit dem Schutzelement (251) mitbewegt wird und eine Bewegungsamplitude des ersten Sensorelements (252) größer ist als eine Bewegungsamplitude des Schutzelements (251), wobei das Verfahren ein Freigeben eines Arbeitsschritts der Arbeitsmaschine (100) durch eine Steuereinheit (280) der Arbeitsmaschine (100) basierend auf einem Empfangen des für den Kontakt indikativen Signals umfasst.

11. Verfahren nach Anspruch 10, wobei die Bewegungsamplitude des ersten Sensorelements (252) in einem ersten Bewegungsabschnitt, der die Freigabeposition umfasst, kleiner oder gleich der Bewegungsamplitude des Schutzelements (251) in dem ersten Bewegungsabschnitt ist und wobei die Bewegungsamplitude des ersten Sensorelements (252) in einem zweiten Bewegungsabschnitt, der die Schutzposition umfasst, größer als die Bewegungsamplitude des Schutzelements (251) in dem zweiten Bewegungsabschnitt ist.

12. Verfahren nach Anspruch 10 oder 11, wobei das ersten Sensorelement (252) an einem um eine Achse (R) drehbar gelagerten Hebel (390) angeordnet ist, wobei die Achse den Hebel in einen ersten Hebelarm (391) und einen zweiten Hebelarm (392) unterteilt, wobei der zweite Hebelarm (392) kürzer ist als der erste Hebelarm (391) und das erste Sensorelement (252) an dem ersten Hebelarm angeordnet ist, wobei der Schutzschieber (150) einen Anschlag (255) umfasst, an den der zweite Hebelarm (392) bei einer Bewegung des Schutzelements (251) in Richtung der Schutzposition anschlägt und durch eine Drehung des Hebels (390) um die Achse das erste Sensorelement (252) in Richtung des zweiten Sensorelements (253) bewegt wird, wobei optional der erste Hebelarm (391) eine größere Masse als der zweite Hebelarm (392) besitzt.

13. Verfahren nach einem der Ansprüche 10 bis 12, wobei der Schutzschieber ein Rückstellelement (695) umfasst und wobei das erste Sensorelement bei einer Bewegung des Schutzelements (251) von der Schutzposition in die Freigabeposition durch das Rückstellelement (695) von dem zweiten Sensorelement (253) wegbewegt wird.

14. Verfahren nach einem der Ansprüche 10 bis 13, wobei das Schutzelement (251) und die Bewegungsamplitude des Schutzelements einen Bereich definieren und das Montageelement (260), das erste Sensorelement (252) und das zweite Sensorelement (253) außerhalb des Bereichs angeordnet sind.

15. Verfahren nach einem der Ansprüche 10 bis 14, wobei das erste Sensorelement (251) und das zweite Sensorelement (253) zusammen eine magnetische Schaltung bilden, wobei optional das zweite Sensorelement (253) einen betätigbaren Magnetschalter und das erste Sensorelement (252) einen Magneten zum betätigen des Magnetschalters umfassen.

## Claims

1. Protective slide (150) for a work machine (100) for processing packaging material (130), said protective slide (150) comprising an assembly element (260) for connecting said protective slide (150) to a work machine (100), a protective element (251) arranged to be movable relative to said assembly element (260), a first sensor element (252) and a second sensor element (253) fixedly arranged at said assembly element (260), wherein said protective element (251) can be moved relative to said assembly element (260) between a release position and a protection position and wherein said first sensor element (252) and the second sensor element (253) are configured to come into contact in the protection position of said protective element (251) and to output a signal that is indicative of the contact, **characterized in that** said first sensor element (252) is arranged such that it can be moved along with said protective element (251) and an amplitude of motion of said first sensor element (252) is greater than an amplitude of motion of said protective element (251).

2. Protective slide (150) according to claim 1, wherein said first sensor element (252) and said second sensor element (253) together form a magnetic circuit, wherein said second sensor element (253) optionally comprises an actuatable magnetic switch and said first sensor element (252) comprises a magnet for actuating said magnetic switch.

3. Protective slide (150) according to claim 1 or 2, wherein the amplitude of motion of said first sensor element (252) in a first motion section that comprises the release position is smaller than or equal to the amplitude of motion of said protective element (150) in the first motion section and wherein the amplitude of motion of said first sensor element (252) in a second motion section that comprises the protection position is greater than the amplitude of motion of said protective element (150) in the second motion section.

4. Protective slide (150) according to one of the claims 1 to 3, wherein said first sensor element (252) is arranged at a lever (390) which is mounted to be rotatable about an axis (R), wherein said axis divides said lever (390) into a first lever arm (391) and a second lever arm (392), wherein said second lever arm (392) is shorter than said first lever arm (391) and said first sensor element (252) is arranged at said first lever arm, wherein said protective slide (150) comprises a stop (255) against which said second lever arm (392) can abut when said protective element (251) moves in the direction of the protection position so that, with a rotation of said lever (390) about said axis (R), said first sensor element (252) can be moved in the direction of said second sensor element (253), wherein said first lever arm (391) optionally has a greater mass than said second lever arm (392).

5. Protective slide (150) according to one of the claims 1 to 4, wherein said protective slide comprises a return element (695) which is arranged such that said return element (695) moves said first sensor element (252) away from said second sensor element (253) when said protective element (251) moves from the protection position to the release position.

6. Protective slide (150) according to one of the claims 1 to 5, wherein said protective element (251) and the amplitude of motion of said protective element define a region, and said assembly element (260), said first sensor element (252), and said second sensor element (253) are arranged outside said region.

7. Work machine (100) for processing packaging material (130), said work machine comprising a feed opening (144) for feeding packaging material, a work space (103) for processing packaging material, a discharge opening (143) for discharging processed packaging material from said work space (103), and a protective slide (150) according to one of the claims 1 to 6 in the region of said feed opening (144) and/or in the region of said discharge opening (143), wherein said protective slide (150) is arranged such that said protective element (251) in the protection position blocks an operator from reaching into said feed opening (144) and/or said discharge opening (143).

8. Work machine (100) according to claim 7, wherein said protective element (251) in the protection position enables packaging material to be transported into said feed opening (144) and/or processed packaging material to be transported out of said discharge opening (143).

9. Work machine (100) according to claim 7 or 8, wherein said work machine (100) comprises a sealing station, a deep-drawing machine, a loading machine, an inspection device, and/or a disinfection device.

10. Method for processing packaging material (130) with a work machine (100), wherein said work machine comprises a feed opening (144) for feeding packaging material, a work space (103), a discharge opening (143) for discharging processed packaging material from said work space (103), and a protective slide (150), wherein said protective slide (150) is connected to said work machine (100) by way of an assembly element (260) of said protective slide (150) and comprises a protective element (251) arranged to be movable relative to said assembly element (260), a first sensor element (252) and a second sensor element (253) fixedly arranged at said assembly element, wherein said protective element (251) can be moved relative to said assembly element (260) between a release position and a protection position and wherein said first sensor element (252) and said second sensor element (253) come into contact in the protection position of said protective element (251) and output a signal that is indicative of the contact, **characterized in that** said first sensor element (252) is arranged such that it is moved along with said protective element (251) and an amplitude of motion of said first sensor element (252) is greater than an amplitude of motion of said protective element (251), wherein the method comprises releasing a work step of said work machine (100) by a control unit (280) of said work machine (100) based on receiving said signal that is indicative of the contact.

11. Method according to claim 10, wherein the amplitude of motion of said first sensor element (252) in a first motion section that comprises the release position is smaller than or equal to the amplitude of motion of said protective element (251) in the first motion section and wherein the amplitude of motion of said first sensor element (252) in a second motion section that comprises the protection position is greater than the amplitude of motion of said protective element (251) in the second motion section.

12. Method according to claim 10 or 11, wherein said first sensor element (252) is arranged at a lever (390) which is mounted to be rotatable about an axis (R), wherein said axis divides said lever into a first lever arm (391) and a second lever arm (392), wherein said second lever arm (392) is shorter than said first lever arm (391) and said first sensor element (252) is arranged at said first lever arm, wherein said protective slide (150) comprises a stop (255) against which said second lever arm (392) can abut when said protective element (251) moves in the direction of the protection position so that, with a rotation of said lever (390) about said axis, said first sensor element (252) is moved in the direction of said second sensor element (253), wherein said first lever arm (391) optionally has a greater mass than said second lever arm (392).

13. Method according to one of the claims 10 to 12, wherein said protective slide comprises a return element (695) and wherein said first sensor element is moved away from said second sensor element (253) by said return element (695) when said protective element (251) moves from the protection position to the release position.

14. Method according to one of the claims 10 to 13, wherein said protective element (251) and the amplitude of motion of said protective element define a region, and said assembly element (260), said first sensor element (252), and said second sensor element (253) are arranged outside said region.

15. Method according to one of the claims 10 to 14, wherein said first sensor element (251) and said second sensor element (253) together form a magnetic circuit, wherein said second sensor element (253) optionally comprises an actuatable magnetic switch and said first sensor element (252) comprises a magnet for actuating said magnetic switch.

**Revendications**

1. Coulisseau de protection (150) pour une machine de travail (100) permettant de traiter du matériau d'emballage (130), le coulisseau de protection (150) comprenant un élément de montage (260) permettant de relier le coulisseau de protection (150) à une machine de travail (100), un élément de protection (251) agencé de manière mobile par rapport à l'élément de montage, un premier élément de capteur (252) et un second élément de capteur (253) agencé de manière fixe au niveau de l'élément de montage (260), dans lequel l'élément de protection (251) peut être déplacé par rapport à l'élément de montage (260) entre une position de libération et une position de protection et dans lequel le premier élément de capteur (252) et le second élément de capteur (253) sont conçus pour entrer en contact dans la position de protection de l'élément de protection (251) et pour émettre un signal indicatif du contact, **caractérisé en ce que**
le premier élément de capteur (252) est agencé de manière à pouvoir être déplacé avec l'élément de protection (251) et une amplitude de déplacement du premier élément de capteur (252) est supérieure à une amplitude de déplacement de l'élément de protection (251).

2. Coulisseau de protection (150) selon la revendication 1, dans lequel le premier élément de capteur (252) et le second élément de capteur (253) forment ensemble un circuit magnétique, dans lequel le second élément de capteur (253) comprend de manière optionnelle un commutateur magnétique actionnable et le premier élément de capteur (252) comprend un aimant permettant d'actionner le commutateur magnétique.

3. Coulisseau de protection (150) selon la revendication 1 ou 2, dans lequel l'amplitude de déplacement du premier élément de capteur (252) dans une première section de déplacement comprenant la position de libération est inférieure ou égale à l'amplitude de déplacement de l'élément de protection (150) dans la première section de déplacement et dans lequel l'amplitude de déplacement du premier élément de capteur (252) dans une seconde section de déplacement comprenant la position de protection est supérieure à l'amplitude de déplacement de l'élément de protection (150) dans la seconde section de déplacement.

4. Coulisseau de protection (150) selon l'une quelconque des revendications 1 à 3, dans lequel le premier élément de capteur (252) est agencé au niveau d'un levier (390) monté rotatif autour d'un axe (R), dans lequel l'axe divise le levier (390) en un premier bras de levier (391) et en un second bras de levier (392), dans lequel le second bras de levier (392) est plus court que le premier bras de levier (391) et le premier élément de capteur (252) est agencé au niveau du premier bras de levier, dans lequel le coulisseau de protection (150) comprend une butée (255) au niveau de laquelle le second bras de levier (392) peut venir en butée lors d'un déplacement de l'élément de protection (251) en direction de la position de protection, de sorte que le premier élément de capteur (252) peut être déplacé en direction du second élément de capteur (253) grâce à une rotation du levier (390) autour de l'axe (R), dans lequel le premier bras de levier (391) présente de manière optionnelle une masse supérieure à celle du second bras de levier (392).

5. Coulisseau de protection (150) selon l'une quelconque des revendications 1 à 4, dans lequel le coulisseau de protection comprend un élément de rappel (695) qui est agencé de sorte que l'élément de rappel (695) éloigne le premier élément de capteur (252) du second élément de capteur (253) lors d'un déplacement de l'élément de protection (251) de la position de protection jusqu'à la position de libération.

6. Coulisseau de protection (150) selon l'une quelconque des revendications 1 à 5, dans lequel l'élément de protection (251) et l'amplitude de déplacement de l'élément de protection définissent une région et l'élément de montage (260), le premier élément de capteur (252) et le second élément de capteur (253) sont agencés à l'extérieur de la région.

7. Machine de travail (100) permettant de traiter du matériau d'emballage (130), la machine de travail comprenant un orifice d'alimentation (144) permettant d'alimenter du matériau d'emballage, un espace de travail (103) permettant de traiter du matériau d'emballage, un orifice d'évacuation (143) permettant d'évacuer du matériau d'emballage traité hors de l'espace de travail (103) et un coulisseau de protection (150) selon l'une quelconque des revendications 1 à 6 dans la région de l'orifice d'alimentation (144) et/ou dans la région de l'orifice d'évacuation (143), dans laquelle le coulisseau de protection (150) est agencé de sorte que l'élément de protection (251) empêche, dans la position de protection, une intervention d'un opérateur dans l'orifice d'alimentation (144) et/ou dans l'orifice d'évacuation (143).

8. Machine de travail (100) selon la revendication 7, dans laquelle l'élément de protection (251) permet, dans la position de protection, le transport du matériau d'emballage jusque dans l'orifice d'alimentation (144) et/ou le transport du matériau d'emballage traité à partir de l'orifice d'évacuation (143).

9. Machine de travail (100) selon la revendication 7 ou 8, dans lequel la machine de travail (100) comprend un poste de scellage, une machine d'emboutissage, une machine d'insertion, un dispositif d'inspection et/ou un dispositif de désinfection.

10. Procédé de traitement de matériau d'emballage (130) avec une machine de travail (100), dans lequel la machine de travail comprend un orifice d'alimentation (144) permettant d'alimenter du matériau d'emballage, un espace de travail (103), un orifice d'évacuation (143) permettant d'évacuer du matériau d'emballage traité hors de l'espace de travail (103) et un coulisseau de protection (150), dans lequel le coulisseau de protection (150) est relié à la machine de travail (100) par l'intermédiaire d'un élément de montage (260) du coulisseau de protection (150) et comprend un élément de protection (251) agencé de manière mobile par rapport à l'élément de montage (260), un premier élément de capteur (252) et un second élément de capteur (253) agencé de manière fixe au niveau de l'élément de montage, dans lequel l'élément de protection (251) peut être déplacé par rapport à l'élément de montage (260) entre une position de libération et une position de protection et dans lequel le premier élément de capteur (252) et le second élément de capteur (253) entrent en contact dans la position de protection de l'élément de protection (251) et émettent un signal indicatif du contact, **caractérisé en ce que** le premier élément de capteur (252) est agencé de manière à être déplacé avec l'élément de protection (251) et une amplitude de déplacement du premier élément de capteur (252) est supérieure à une amplitude de déplacement de l'élément de protection (251), dans lequel le procédé comprend une étape consistant à autoriser une étape de travail de la machine de travail (100) grâce à une unité de commande (280) de la machine de travail (100) en se basant sur une réception du signal indicatif du contact.

**11.** Procédé selon la revendication 1 ou 10, dans lequel l'amplitude de déplacement du premier élément de capteur (252) dans une première section de déplacement comprenant la position de libération est inférieure ou égale à l'amplitude de déplacement de l'élément de protection (150) dans la première section de déplacement et dans lequel l'amplitude de déplacement du premier élément de capteur (252) dans une seconde section de déplacement comprenant la position de protection est supérieure à l'amplitude de déplacement de l'élément de protection (150) dans la seconde section de déplacement.

**12.** Procédé selon l'une quelconque des revendications 10 à 11, dans lequel le premier élément de capteur (252) est agencé au niveau d'un levier (390) monté rotatif autour d'un axe (R), dans lequel l'axe divise le levier (390) en un premier bras de levier (391) et en un second bras de levier (392), dans lequel le second bras de levier (392) est plus court que le premier bras de levier (391) et le premier élément de capteur (252) est agencé au niveau du premier bras de levier, dans lequel le coulisseau de protection (150) comprend une butée (255) au niveau de laquelle le second bras de levier (392) vient en butée lors d'un déplacement de l'élément de protection (251) en direction de la position de protection et le premier élément de capteur (252) est déplacé en direction du second élément de capteur (253) grâce à une rotation du levier (390) autour de l'axe, dans lequel le premier bras de levier (391) présente de manière optionnelle une masse supérieure à celle du second bras de levier (392).

**13.** Procédé selon l'une quelconque des revendications 10 à 12, dans lequel le coulisseau de protection comprend un élément de rappel (695) et dans lequel le premier élément de capteur est éloigné du second élément de capteur (253) grâce à l'élément de rappel (695) lors d'un déplacement de l'élément de protection (251) de la position de protection jusqu'à la position de libération.

**14.** Procédé selon l'une quelconque des revendications 10 à 13, dans lequel l'élément de protection (251) et l'amplitude de déplacement de l'élément de protection définissent une région et l'élément de montage (260), le premier élément de capteur (252) et le second élément de capteur (253) sont agencés à l'extérieur de la région.

**15.** Procédé selon l'une quelconque des revendications 10 à 14, dans lequel le premier élément de capteur (252) et le second élément de capteur (253) forment ensemble un circuit magnétique, dans lequel le second élément de capteur (253) comprend de manière optionnelle un commutateur magnétique actionnable et le premier élément de capteur (252) comprend un aimant permettant d'actionner le commutateur magnétique.

FIG. 1

FIG. 2

FIG. 3

FIG. 4

EP 4 414 275 B1

FIG. 5

FIG. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102021104083 A1
- DE 3925796 A1
- DE 2516293 A1
- US RE34396 E
- EP 2792601 A1